**Europäisches Patentamt**

**European Patent Office**

**Office européen des brevets**

(19)

(11) Veröffentlichungsnummer : **0 186 152 B2**

(12)

# NEUE EUROPÄISCHE PATENTSCHRIFT

(45) Veröffentlichungstag der neuen Patentschrift :
**01.07.92 Patentblatt 92/27**

(51) Int. Cl.⁵ : **B65H 7/18,** B65H 3/48,
B65H 3/60, G06K 13/107

(21) Anmeldenummer : 85116299.0

(22) Anmeldetag : 20.12.85

(54) Vorrichtung und Verfahren zum Vereinzeln von Blattgut.

(30) Priorität : 28.12.84 DE 3447777

(43) Veröffentlichungstag der Anmeldung :
02.07.86 Patentblatt 86/27

(45) Bekanntmachung des Hinweises auf die
Patenterteilung :
30.08.89 Patentblatt 89/35

(45) Bekanntmachung des Hinweises auf die
Entscheidung über den Einspruch :
01.07.92 Patentblatt 92/27

(84) Benannte Vertragsstaaten :
AT BE CH DE FR GB IT LI LU NL SE

(56) Entgegenhaltungen :
DE-A- 2 850 351
DE-B- 1 901 846
GB-A- 2 055 085
GB-A- 2 071 623
US-A- 4 252 251

(73) Patentinhaber : GAO Gesellschaft für
Automation und Organisation mbH
Euckenstrasse 12
W-8000 München 70 (DE)

(72) Erfinder : Mitzel, Wilhelm
Johann-Hackl-Ring 102
W-8011 Neukeferloh (DE)
Erfinder : Leuthold, Karl-Heinz
Waldesruh 13
W-8000 München 70 (DE)
Erfinder : Geier, Josef
Dreyerstrasse 7
W-8000 München 21 (DE)

(74) Vertreter : Klunker . Schmitt-Nilson . Hirsch
Winzererstrasse 106
W-8000 München 40 (DE)

EP 0 186 152 B2

EP 0 186 152 B2

## Beschreibung

Die Erfindung betrifft ein Verfahren bzw. eine Vorrichtung zur automatischen Vereinzelung von flachem Blattgut, insbesondere Banknoten mit hoher Geschwindigkeit, wobei das Blattgut stapelweise zu einem Vereinzelungsort transportiert wird, von wo aus es Blatt für Blatt einem weiterführenden Transportsystem zugeführt wird.

Die Aufgabe obengenannter Verfahren bzw. Vorrichtungen besteht im allgemeinen darin, mit möglichst hoher Sicherheit und je nach Verwendung unter Umständen auch mit möglichst hoher Geschwindigkeit einzelne Blätter von einem Stapel abzuziehen. Sicherheit heißt in diesem Zusammenhang, daß die Blätter in sequentieller Folge ohne sogenannte Vereinzelungslücken vereinzelt werden und daß der Abstand der aufeinanderfolgenden Blätter einen definierten und konstanten Wert aufweist.

Verfahren und Vorrichtungen mit obengenannter Zielsetzung sind mehrfach bekannt.

Die DE-PS-24 54 082 beispielsweise beschreibt eine Vereinzelungsvorrichtung, die im wesentlichen aus einer Vereinzelungswalze, einer Rückhaltewalze, einem Rückhalteelement und einer Vorschubwalze besteht. Der Stapel wird zwischen einer Auflage- und einer Andruckplatte gehalten, wobei die Vorschubwalze jeweils ein oder mehrere Blätter durch einen zwischen Vereinzelungswalze und dem Rückhalteelement gebildeten Vereinzelungsspalt zur Vereinzelungswalze befördert. Das Rückhalteelement, an dem die Blattvorderkanten des Stapels anliegen, sorgt in einer Art Vorvereinzelung dafür, daß immer nur eine begrenzte Zahl von Blättern zur Vereinzelungswalze vorgeschoben werden. Die Vereinzelungswalze ist als Saugwalze ausgebildet. Sie erfaßt die Vorderkanten der zu vereinzelnden Blätter, um diese nacheinander einem weiterführenden Transportsystem zu übergeben. Um Doppelabzüge zu verhindern, ist gegenüber der Vereinzelungswalze eine Rückhaltewalze vorgesehen, die ebenfalls als Saugwalze ausgebildet, sich im umgekehrten Sinne wie die Vereinzelungswalze dreht und dafür sorgt, daß immer nur das an der Vereinzelungswalze anliegende Blatt vereinzelt wird. In der Vereinzelungsvorrichtung ist außerdem eine mit der Stapelauflageplatte verbundene Rütteleinrichtung vorgesehen, die auf den im Vereinzelungsprozeß befindlichen Stapel ständig einwirkt. Durch die Rüttelbewegung soll einerseits der Stapel aufgelockert werden, so daß sich die einzelnen Blätter des Stapels einfacher voneinander trennen lassen, andererseits soll dem Stapel eine Bewegungskomponente in Richtung auf den Vereinzelungsspalt aufgeprägt werden. Diese der Vereinzelungssicherheit dienende Maßnahme wird während des gesamten Vereinzelungsvorgangs auf jeden Stapel angewendet. Das die Rüttelbewegung erzeugende Aggregat verursacht dabei einen permanenten, nicht unerheblichen Lärmpegel. Das permanente Rütteln des Stapels sorgt zwar für eine gewisse Kontinuität des Vereinzelungsvorganges, gerade bei extrem guter Blattgutqualität im Stapel oder auch bei sehr schlechter Qualität der Blätter werden allerdings dadurch auch Störungen provoziert, indem z. B. eine im Stapel vorhandene Tendenz zum Verkeilen gefördert wird, aus dem Stapel herausragende Blätter vollends aus dem Stapel herausgerüttelt werden etc. Derartige Störungen sind in der Regel nur durch zeitaufwendigen manuellen Eingriff zu beheben.

Ein weiterer Vorschlag ist beispielsweise in der DE-B-19 01 846 beschrieben. Bei der bekannten Vereinzelungsvorrichtung werden einzelne Blätter von einem Stapel ohne den Einsatz beweglicher Teile lediglich mit pneumatischen Mitteln vereinzelt, wobei der Stapel während der Vereinzelung ständig nachgeführt wird. Zur Steuerung der Nachführung wird vorgeschlagen, anhand des Luftdrucks in drei übereinanderliegenden Luftkanälen die jeweilige Höhe des zu vereinzelnden Blattstapels zu ermitteln. Um das Zusammenkleben der einzelnen Banknoten zu verhindern, werden durch geeignet angeordnete Luftdüsen die Vorderkante des Stapels und die Seitenkanten derart mit Druckluft beaufschlagt, daß das jeweils oberste Blatt vom Stapel getrennt wird.

Obwohl die Beaufschlagung mit Druckluft durch entsprechend angeordnete Kanäle eine Maßnahme ist, die den Vereinzelungsvorgang unterstützen kann, werden damit nicht sämtliche Probleme gelöst.

Werden Verfahren bzw. Vorrichtungen der gennanten Art in Hochgeschwindigkeits-Sortieranlagen eingesetzt (z. B. 40 Blätter/Sekunde), sind die Anforderungen an die Leistungsfähigkeit besonders hoch. Das Verfahren sollte nicht nur schnell und sicher arbeiten, sondern zudem in der Lage sein, auch Blätter sehr unterschiedlicher Qualität ohne Unterbrechung verarbeiten zu können. Bei der Verarbeitung von Banknoten reicht beispielsweise die Qualitätspalette von nahezu unbenutzten, steifen und relativ glatten bis zu stark abgenutzten, lappigen, aufgerauhten und auch eingerissenen Blättern. Weiter erschwerend kommt hinzu, daß diese stark unterschiedlichen Qualitäten in jeder beliebigen Verteilung in einem Stapel auftreten können.

Es liegt auf der Hand, daß die Funktion eines Vereinzelungsverfahrens die Leistungsfähigkeit einer Sortieranlage sehr wesentlich beeinflußt. Das Verfahren sollte daher möglichst unabhängig von der Qualität der Blätter einen hohen und lückenlosen Durchsatz aufweisen. Da manuelle Eingriffe den Durchsatz grundsätzlich negativ beeinflussen, sollte das Verfahren darüber hinaus gewährleisten, daß manuelle Eingriffe von der Bedienperson der Sortieranlage auf ein Minimum reduziert werden.

Die Aufgabe der Erfindung ist es daher, ein Verfahren zum Vereinzeln von flachem Blattgut, insbesondere Banknoten, vorzuschlagen, das weitgehend unabhängig vom Erhaltungszustand der Banknoten bei hoher Ver-

2

einzelungssicherheit einen hohen Durchsatz aufweist. Weiterhin besteht die Aufgabe darin, eine Vorrichtung zur Durchführung des Verfahrens vorzuschlagen.

Erfindungsgemäß wird die Aufgabe durch die in den unabhängigen Ansprüchen angegebenen Merkmale gelöst.

Die Erfindung geht von der Erkenntnis aus, daß eine Reihe von mechanischen Einfluß- oder Manipuliermöglichkeiten bereitgehalten werden muß, die abhängig von der Art der Störung im Vereinzelungsablauf oder im Stapelzustand in Aktion gesetzt werden. So kann die Qualität der Vereinzelung ständig automatisch überwacht und im Störungsfall mit mechanischen Mitteln auf die Störung abgestimmt Einfluß genommen werden, um die ordnungsgemäße Form des Stapels wieder herzustellen. Die Art der mechanischen Einflußnahme auf den Stapel kann aber auch von Informationen über den Zustand und die Form des Stapels am oder vor dem Vereinzelungsort abhängig gemacht werden. Die Informationen können genutzt werden, um vorab die Wahrscheinlichkeit einer Störung zu ermitteln. Wen also beispielsweise bei einem Stapel aufgrund falscher Lagerung dessen Vorderkante stark umgebogen ist, besteht eine große Wahrscheinlichkeit, daß die Vorschubeinrichtung des Vereinzelers nicht in der Lage ist, die einzelnen Blätter durch den Vereinzelungsspalt zu befördern. In diesem speziellen Fall könnte gewissermaßen vorbeugend mit einer geeigneten Einrichtung am Rückhalteelement, wie weiter unten noch detaillierter erläutert wird, die Stoßkante derart verformt werden, daß eine Weiterführung einzelner Blätter durch den Vereinzelungsspalt möglich wird.

Lassen die über Form und Zustand des Stapels gewonnenen Informationen auf eine sehr hohe Störrate schließen, kann es auch vorteilhaft sein, den betreffenden Stapel erst gar nicht zur Vereinzelungsvorrichtung zu transportieren.

Gemäß einer Weiterbildung der Erfindung wird die Art der Manipulation am Stapel nicht nur von der Art der festgestellten Störung, sondern auch davon abhängig gemacht, welche Informationen über den Zustand und die Form des zur Vereinzelung anstehenden Stapels vorliegen. Es handelt sich hierbei um Informationen, die Auskunft darüber geben, bezüglich welcher Eigenschaften sich der zu vereinzelnde Stapel von einem Ideal- oder auch Soll-Stapel unterscheidet, der erfahrungsgemäß eine problemlose Vereinzelung ermöglicht. So kann beispielsweise ein Stapel aufgrund falscher Lagerung mehr oder weniger stark gewellt sein, er kann abgeknickte Kanten aufweisen, es können ein oder mehrere Noten aus dem Stapel herausragen ; die Banknoten können auch so stark abgenutzt sein, daß der Stapel eine wesentlich größere Dicke aufweist als ein Stapel von nur wenig abgenutzten Noten usw. Neben den genannten Abweichungen, die der Stapel in der Regel schon vor der eigentlichen Vereinzelung aufweist, kann der Stapel auch während der Vereinzelung Formen annehmen, die zu einer Störung im Vereinzelungsprozeß führen können. Die vor und auch während der Vereinzelung über die Form und den Zustand des Stapels mit geeigneten Sensoren ermittelten Informationen werden gesammelt und gegebenenfalls bis zum Störungsfall zwischengespeichert. Unter Berücksichtigung dieser Informationen wird dann für die bei der Vereinzelung auftretende Unregelmäßigkeit jeweils diejenige Maßnahme ergriffen, die am besten geeignet erscheint, die Störung zu beheben.

Ein Vorteil der erfindungsgemäßen Lösung besteht darin, daß ein hoher Prozentsatz der auftretenden Störungen im Vereinzelungsprozeß sofort ohne manuellen Eingriff gezielt behoben werden kann. Dadurch wird der Durchsatz der Vereinzelungsvorrichtung verbessert und die Bedienperson für andere Arbeiten freigehalten. Die Art der mechanischen Manipulation am Stapel kann dabei nur von der Art der festgestellten Störung abhängig gemacht werden, wobei einer bestimmten Störung sofort stets diejenige Maßnahme zugeordnet wird, mit der aufgrund von Erfahrungswerten die besten Ergebnisse erzielt werden. Da die mechanische Manipulation am Stapel nur bei Bedarf und in der Regel auch nur kurzzeitig durchgeführt wird, entfallen die oben im Zusammenhang mit dem Stand der Technik genannten Nachteile.

Ein weiterer Vorteil der erfindungsgemäßen Weiterbildungen liegt darin, daß nicht nur in Abhängigkeit von der Art der Störung, also bei Auftreten von jeweils kurzen Vereinzelungslücken, bei verzögertem Beginn der Vereinzelung, bei längerer Unterbrechung eines bereits eingeleiteten Vereinzelungsvorganges, bei wiederholtem Auftreten von Doppelabzügen etc., sondern auch in Abhängigkeit vom jeweiligen Zustand und der Form des Stapels, d. h. auch unter Einbeziehung jeweils aktueller Informationen über den im Vereinzelungsprozeß befindlichen Stapel, Maßnahmen zur Fehlerbehebung ergriffen werden können.

Weitere Vorteile sowie Weiterbildungen der Erfindung ergeben sich aus den Unteransprüchen sowie aus der nachfolgenden Beschreibung eines Ausführungsbeispiels der Erfindung anhand der beigefügten Zeichnung.

Darin zeigen:

Fig. 1 die Seitenansicht einer Vereinzelungsvorrichtung und eines Blattgutstapel-Transportsystems,

Fig. 2 einen Ausschnitt der Vereinzelungsvorrichtung in Seitenansicht mit seitlichen Blasluftdüsen und Blasluftdüsen in der Rückhalteeinrichtung, über die mit Blasluft auf den im Vereinzelungsprozeß befindlichen Stapel Einfluß genommen werden kann,

Fig. 3a einen Teilauschnitt der Vereinzelungsvorrichtung in Seitenansicht mit Blättern des Stapels, die sich vor anderen Blättern an der Rückhalteeinrichtung nach oben geschoben haben,

Fig. 3b wie Fig. 3a, wobei sich Blätter des Stapels vor anderen Blättern an der Rückhalteeinrichtung nach unten geschoben haben,

Fig. 4 wie Fig. 2, wobei in der Rückhalteeinrichtung ein in der Drehrichtung umschaltbares Flachband integriert ist, mit dem Einfluß auf die Stapelvorderkante der Blätter genommen werden kann,

Fig. 5 ein Blockschaltbild für die Steuerung zur Bearbeitung der verschiedenen Störfälle bei einer Vereinzelung von Blattgutstapeln.

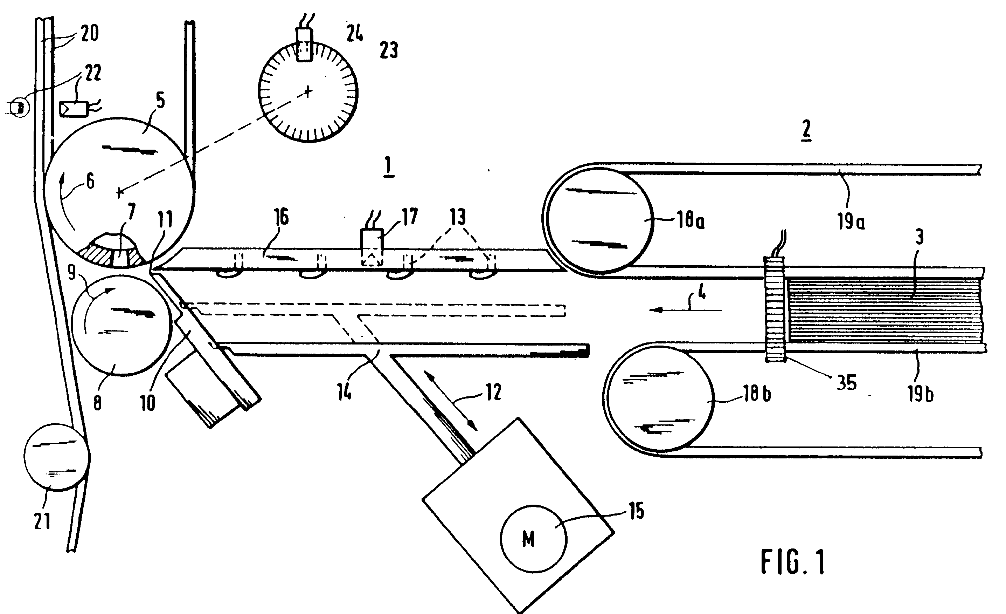

Die Fig. 1 zeigt in einer beispielhaften Ausführungsform eine Vereinzelungsvorrichtung 1, wie sie beispielsweise in Hochgeschwindigkeits-Sortierautomaten verwendet wird. Mit einem Stapel-Transportsystem 2 werden Blattgutstapel 3 nacheinander jeweils dann zur Vereinzelungsvorrichtung transportiert, wen das letzte Blatt des vorhergehenden Stapels vereinzelt ist, was vom Detektor 17 festgestellt wird.

Die Vereinzelungsvorrichtung besteht im wesentlichen aus einer Andruckplatte 14, einer Vorschubeinrichtung 16, einer Vereinzelungswalze 5, einer Rückhaltewalze 8 und einer Rückhalteeinrichtung 10.

Auf der Andruckplatte 14 wird der vom Stapel-Transport-system 2 antransportierte Blattgutstapel 3 abgelegt und durch Ansteuerung des Motors 15 in Richtung des Pfeils 12 mit leichtem Druck an die Vorschubeinrichtung 16 angedrückt. Die Vorschubeinrichtung 16 ist beispielsweise als Luftleitplatte ausgebildet. Mit Hilfe der Vorschub einrichtung 16 werden Blätter vom Stapeltisch 14 sequentiell zur Vereinzelungswalze 5 transportiert. Die Luftleitplatte weist hierfür mit Blasluft versorgbare Blasluftbohrungen auf, die so angeordnet sind, daß sie dem obersten Blatt des Stapels eine Schubkomponente in Richtung der Vereinzelungswalze 5 verleihen. Mittels der in einer Reihe parallel zur Achse der Vereinzelungswalze 5 angeordneten Saugöffnungen 7 werden die jeweiligen Blattvorderkanten erfaßt und durch Drehung in Richtung des Pfeils 6 in das nachfolgende Transportsystem, bestehend aus den Riemen 20 und der Transportrolle 21 überführt.

Während des Vereinzelungsvorgangs liegen die Vorderkanten der Blätter an der Rückhalteeinrichtung 10 an, wobei zwischen Rückhalteeinrichtung 10 und Luftleitplatte 16 bzw. Vereinzelungswalze 5 ein Vereinzelungsspalt 11 vorbestimmter Weite derart eingestellt ist, daß möglichst immer nur die an der Luftleitplatte 16 direkt anliegenden oberen Blätter des Stapels zur Vereinzelungswalze 5 befördert werden.

Gegenüber der Vereinzelungswalze 5 ist die Rückhaltewalze 8 vorgesehen, die sich entgegen der Vereinzelungsrichtung in Richtung des Pfeils 9 dreht. Die Rückhaltewalze 8 weist auf ihrem gesamten Umfang Saugöffnungen auf. Die Blätter, die bereits durch den Vereinzelungsspalt der Rückhalteeinrichtung 10 zwischen der Vereinzelungswalze 5 und der Rückhaltewalze 8 mittels der Luftleitplatte 16 transportiert worden sind, werden durch die entgegen der Vereinzelungsrichtung drehenden Rückhaltewalze 8 zurückgehalten, so daß die Vereinzelungswalze 5 jeweils nur das oberste Blattgut des Stapels vereinzelt. Bezüglich der Einzelheiten der hier nur kurz beschriebenen Vereinzelungsvorrichtung, insbesondere der Luftleitplatte, sei auf die DE-OS 28 14 306 verwiesen.

Der Durchsatz einer Banknotensortieranlage wird, wie erwähnt, wesentlich von der Leistungsfähigkeit der Vereinzelungsvorrichtung bestimmt. Ziel der Erfindung ist es daher, die Leistungsfähigkeit dieser Vorrichtung gerade auch bei der Verarbeitung von Blättern unterschiedlicher Qualität zu optimieren. Gemäß einer Ausführungsform der Erfindung werden die bei Vereinzelungsvorrichtungen grundsätzlich nicht vermeidbaren Störungen im Vereinzelungsprozess erfaßt und ab hängig von der Art der jeweiligen Störung mit mechanischen Mitteln Manipulationen am Stapel vorgenommen, die geeignet sind, die Störung ohne manuellen Eingriff zu beheben.

Störungen im Vereinzelungsprozeß können z. B. sein :

Vereinzelungslücken, d. h. einzelne fehlende Banknoten im normalerweise seriellen Banknotenstrom,

Vereinzelungsverzögerung, d. h. zu spät vereinzelte Banknoten mit falschem Taktabstand zur vorhergehenden und nachfolgenden Note

Vereinzelungsunterbrechungen, d. h. Unterbrechung des Vereinzelungsablaufes, obwohl sich noch Banknoten in der Vereinzelungsvorrichtung 1 befinden

Doppelabzüge, d. h. Abzug zweier oder auch mehrerer Blätter gleichzeitig.

Die obengenannten Unregelmäßigkeitne im Vereinzelungsfluß können beispielsweise mit dem in Fig. 1 gezeigten Detektor 22, der im Anschluß an die Vereinzelungsvorrichtung im Transportsystem 20, 21 angeordnet ist, erfaßt werden. Zur exakten Bestimmung von Vereinzelungslücken bzw. Verzögerungen ist der beispielsweise als Lichtschranke ausgebildete Detektor 22 mit einem sogenannten Maschinentakt gekoppelt. Der Maschinentakt wird mit Hilfe einer Taktscheibe 23 gewonnen, die starr mit dem Bewegungssystem, beispielsweise mit der Vereinzelungswalze, verbunden ist. Die Zahl der mittels einer Lichtschranke 24 von der Taktscheibe gewonnenen Impulse ist ein Maß für den von der Banknote zurückgelegten Weg, unabhängig von der Geschwindigkeit der Note. Bei ordnungsgemäßer Arbeitsweise des Vereinzelers muß die Banknote, nachdem sie von der Vereinzelungswalze 5 erfaßt wurde, nach einer vorbestimmten Anzahl von Taktimpulsen mit der Vorderkante die Lichtschranke passieren. Je nach dem, um wie viele Impulse die ermittelte Taktzahl von der vorbestimmen Taktzahl abweicht, kann auf Vereinzelungsverzögerung, Vereinzelungslücke oder Vereinzelungsunterbrechung geschlossen werden. Doppel- oder Mehrfachabzüge können ebenfalls aufgrund der durch die Banknote hindurchtretenden Lichtmenge erkannt werden. Je nach Art der Störung wird mit verschiedenen mechanischen Mitteln auf den Stapel Einfluß genommen.

Eine mechanische Manipulation des Stapels ist grundsätzlich von der Ober- oder Unterseite des Stapels sowie von den vier Stoßkanten her möglich. Bezogen auf die in Fig. 1 dargestellte Vorrichtung kann auf die Unterseite des Stapels mit Hilfe der Andruckplatte 14 Einfluß genommen werden. Zur Bewegung der Andruckplatte 14 ist ein Schrittmotor 15 vorgesehen, der sich als Ansteuereinheit besonders gut eignet, weil er die unterschiedlichsten Bewegungsarten für die Andruckplatte ermöglicht. Bei entsprechender Ansteuerung des Schrittmotors kann der zu vereinzelnde Stapel z. B. ruckartig abgesenkt, gerüttelt, vibriert oder auch durch kurze starke Andruckpulse beeinflußt werden.

Es hat sich nun gezeigt, daß beispielsweise bei einer Vereinzelungsunterbrechung ein ruckartiges Absenken der Andruckplatte, bei der der Stapel in der in Fig. 1 gezeigten Ausführungsform aufgrund der Schwerkraft der Andruckplatte folgt, in den meisten Fällen bereits zum Erfolg führt. Grund für eine Vereinzelungsunterbrechung ist oft eine Verklemmung mehrerer Banknoten im Vereinzelungsspalt. Durch das ruckartige Absenken der Andruckplatte wird die Verklemmung gelöst, so daß nach dem Zurückfahren der Andruckplatte in die ursprüngliche Lage die Vereinzelung störungsfrei weiterläuft.

Im folgenden seien weitere Möglichkeiten genannt, auch auf die übrigen Seiten des Stapels Einfluß zu nehmen.

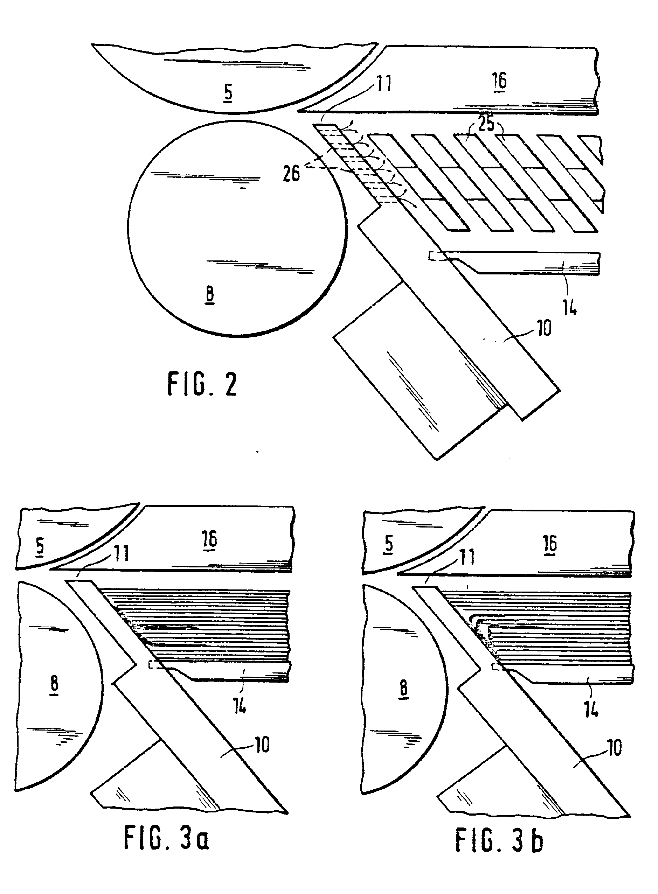

Wie dazu Fig. 2 zeigt, sind im Bereich der Stapellängskante eine Reihe von Blasluftöffnungen 25 vorgesehen, die mit einer nicht dargestellten Druckluftquelle verbunden sind. Mit Hilfe dieser Blasluftöffnungen 25 kann die Längsseite des im Vereinzelungsprozess befindlichen Stapels im Störungsfall mit kontinuierlicher oder auch gepulster Blasluft beaufschlagt werden. Werden vor allem Blattgutstapel mit lappigen und oft benutzten Blättern vereinzelt, kann es vorkommen, daß einzelne Blätter aufgrund der erhöhten Haftreibung durch Verschmutzung stärker aneinander haften. Durch das seitliche Einblasen von Blasluft in den Stapel werden die Reibungskoeffizienten der Blätter untereinander reduziert sowie eine allgemeine Auflockerung des Stapels erzielt. Infolge der verringerten Reibung wird der selektive Vorwärtstransport einzelner Blätter vom Stapel mittels der Luftleitplatte 16 in Richtung der Vereinzelungswalze 5 verbessert.

Um auch die Vorderkante des Stapels in ähnlicher Form zu beeinflußen, können, wie Fig. 2 zeigt, auch in der Rückhalteeinrichtung 10 Blasluftöffnungen 26 vorgesehen werden. Mit ihrer Hilfe sind Banknoten, die im Vorderkantenbereich stärker aneinander haften, besonders gut voneinander zu trennen.

In den Fig. 3a und 3b sind zwei weitere, die Stapelvorderkante betreffende und zu Störungen führende Unregelmäßigkeiten gezeigt. Sind die Vorderkanten einzelner Blätter im Stapel nicht sauber ausgerichtet, können sich bei Auftreffen des Stapels auf die Rückhalteeinrichtung 10 die vorstehenden Vorderkanten vor die anderen Blätter des Stapels schieben. Derart umgebogene Vorderkante bewirken entweder Mehrfachvereinzelungen oder Verkeilungen mehrerer Banknoten im Vereinzelungsspalt 11 (Fig. 3a). In Richtung Adruckplatte 14 umgebogene Banknotenkanten (Fig. 3b) verschließen üblicherweise den Vereinzelungsspalt 11, was ebenfalls zur Unterbrechung des Vereinzelungsvorgangs führt.

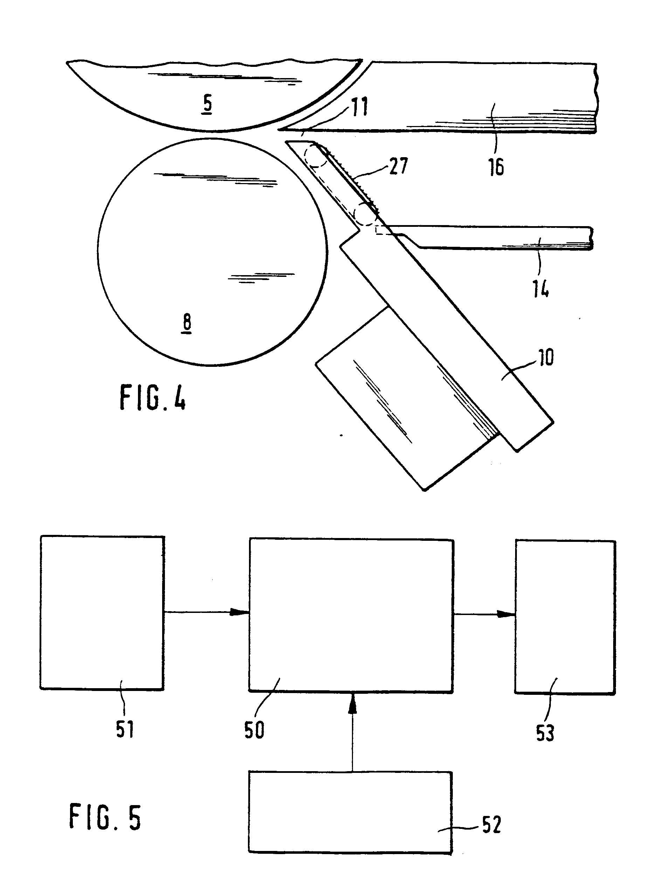

Die Fig. 4 zeigt eine Möglichkeit, die erwähnten Unregelmäßigkeiten an der Stapelvorderkante zu beheben. Dazu ist in der Rückhalteeinrichtung 10 eine in der Drehrichtung umschaltbare Friktionsrolle oder, wie dargestellt, ein Endlosband 27 mit aufgerauhter Oberfläche, beispielsweise einem Fellbesatz, vorgesehen. Treibt man die Friktionsrolle oder das in Fig. 4 dargestellte Endlosband in Richtung Vereinzelungsspalt 11 oder in Richtung Andruckplatte 14 an, so kann man umgebogene Vorderkanten (Fig. 3a,b) wieder in den Stapel zurückschieben. Mit gleich guter Wirkung kann in die Rückhalteeinrichtung 10 auch ein mit Zähnen versehenes Element eingesetzt werden, das dem Transporteur einer Nähmaschine ähnlich oszillierend angebieben auf die Vorderkante des Stapels einwirkt. Die letztere Maßnahme hat den Vorteil, daß das im Bereich der Vorderkante angeordnete Element im inaktiven Zustand in der Rückhalteeinrichtung versenkbar ist und daher im Normalbetrieb den Vereinzelungsvorgang nicht beeinflußt.

Eine weitere Maßnahme, um auf die Vorderkante des Stapels Einfluß zu nehmen, besteht darin, die Wirkung der Rückhaltewalze 8 zu verändern. Wie erwähnt, soll die mit Saugöffnungen versehene Rückhaltewalze diejenigen Blätter, die bereits den Vereinzelungsspalt passiert haben, aber nicht an der Vereinzelungswalze 5 anliegen, zurückhalten. Die gewünschte Wirkung der Rückhaltewalze ist unter anderem von der Qualität der Blätter (z. B. Steifigkeit) abhängig. Durch die Steuerung des an den Saugöffnungen anstehenden Vakuums kann die Wirkung der Rückhaltewalze entsprechend verändert und damit die Rückschiebewirkung abgeschwächt oder auch verstärkt werden.

Die Oberseite des Stapels liegt an der Luftleitplatte 16 an, deren Blasöffnungen ein Luftkissen erzeugen und derart gerichtet sind, daß den Blättern zumindest auch eine Vorschubkomponente in Richtung Vereinzelungsspalt aufgeprägt wird. Durch Verstärken, Pulsen oder auch kurzzeitiges Abschlaten der Blasluft sind verschiedene Eingriffsmöglichkeiten bezüglich der Oberseite des Stapels möglich.

Wenn die Überwachungsvorrichtung Störungen im Vereinzelungsfluß erkennt oder die Stapelform Unregelmäßigkeiten zeigt, werden von den genannten Eingriffsmöglichkeiten eine oder mehrere gleichzeitig gezielt angesteuert um auf den zur Vereinzelung anstehenden Stapel Einfluß zu nehmen.

Dabei werden auch die pneumatischen Mittel als im weitesten Sinne mechanische Mittel verstanden, die getrennt voneinander, aber auch gemeinsam zur Wirkung kommen und entsprechend Einfluß auf den Stapel nehmen können, um den Störfall automatisch zu beseitigen.

Wie erwähnt, besteht eine Weiterbildung der Erfindung darin, die oben beschriebenen Formen der Manipulation am Stapel nicht nur von der Art der festgestellten Störung, sondern auch davon abhängig zu machen, welche Informationen über den Zustand und die Form des zur Vereinzelung anstehenden Stapels vorliegen. Informationen über den Stapel können sowohl vor der Vereinzelung im Stapeltransportsystem 2 als auch während der Vereinzelung in der Vereinzelungsvorrichtung mit geeigneten Sensoren erfaßt werden.

In der Vereinzelungsvorrichtung bzw. in der Luftleitplatte 16 können neben- und auch hintereinander, verteilt auf die Fläche des Stapels, mehrere Abtastfühler 13 vorgesehen sein, um Informationen über das Oberflächenprofil die Welligkeit des Stapels zu erhalten. Durch die Bewertung der Signale aller Abtastfühler kann festgestellt werden, ob der Stapel, insbesondere das zu vereinzelnde oberste Blatt, ganzflächig an der Luftleitplatte anliegt oder ob der Stapel stark gewellt bzw. deformiert ist.

Nach Zufuhr eines Blattgutstapels in die Vereinzelungsvorrichtung können sich einzelne Blätter, wie in der Fig. 3a und 3b gezeigt, an der Rückhalteeinrichtung 12 nach unten oder oben vor die Vorderkanten anderer Blätter schieben und so den Vereinzelungsvorgang stören. Diese Unregelmäßigkeit an der Stapelvorderkante kann festgestellt werden, wen man in der Rückhalteeinrichtung Blasdüsen vorsieht, die den Staudruck im Bereich der Vorderkante messen. Wem sich die Vorderkanten einzelner Blätter vor die Stoßkante des Stapels schieben, wird der Staudruck zunehmen, wodurch die Unregelmäßigkeit an der Stapelvorderkante erkennbar wird.

Um auch schon vor der Vereinzelung Informationen über den Zustand und die Form des Stapels zu bekommen, sind entsprechende Sensoren im Stapel-Transportsystem vorgesehen. Ähnlich wie in der Vereinzelungsvorrichtung können auch hier ober- und unterhalb des Transportsystems beispielsweise mechanische Abtaster 13 vorgesehen werden, die Dicke und Formgebung des Stapels ermitteln. Waren Blattgutstapel längere Zeit gekrümmt gelagert oder gebündelt im Gesamtpaket mit straffen Gummibändern oder Schnüren verpackt, sind sie in den meisten Fällen stark verformt bzw. gewellt. Neben der Erfassung der Dicke und Welligkeit kann vorab im Stapeltransportsystem auch festgestellt werden, ob ein oder mehrere Blätter aus dem Stapel herausragen oder verkantet zum Stapel liegen. Diese Abweichungen vom Ideal- oder Normstapel sind beispielsweise mit bekannten Lichtschranken oder Lichtvorhängen 35 während des Stapeltransports erfaßbar. Die vor und während der Vereinzelung über Form (Stapelinformationen) und Zustand des Stapels ermittelten Informationen werden, wie in der Fig. 5 gezeigt, einer Datenverarbeitungs- und Steuereinheit 50 zugeführt. In dieser Einheit, die beispielsweise mit Hilfe eines Mikroprozessor-Systems mit geeignetem Speichervolumen realisiert werden kann, werden die jeweils aktuellen Informationen über die im Vereinzelungsprozeß befindlichen Stapel gesammelt. Da sich jeweils ein Stapel in der Vereinzelungsvorrichtung und im Stapel in der Warteposition im Stapeltransportsystem werden jeweils die Daten mindestens zweier Stapel erfaßt und verwaltet.

Wie in Fig. 5 dargestellt, werden der Steuereinheit 50 von der Sensoreinheit 51 und der Sensoreinheit 52 Daten angeliefert, die nach entsprechender Bewertung Maßnahmen im Baustein 53 auslösen. Dem besseren Verständnis wegen sind bei der Darstellung in Fig. 5 im Baustein 51 alle Elemente zusammengefaßt, die für die Überwachung des Vereinzelungsablaufes vorgesehen sind und die über die Art einer Störung Auskunft geben. Der Baustein 52 faßt dagegen alle Sensoren zusammen, die für die Prüfung des Stapelzustandes und dessen Form verantwortlich sind. Der Baustein 53 umfaßt schließlich die Vorrichtungselemente, mit denen in der Vereinzelungsvorrichtung oder im Stapel-Transportsystem 2 Einfluß auf Form und Zustand des jeweils in Bearbeitung befindlichen Stapels genommen wird.

Die Aufgabe der Datenverarbeitungs- und Steuereinheit besteht nun darin

die vom Baustein 52 bereitgestellten aktuellen Daten abzuspeichern

in Abhängigkeit von diesen Daten, wenn notwendig, vorbeugende Maßnahmen einzuleiten (vorbeugende Stapelmanipulation) und

im Störungsfall die vom Baustein 51 erhaltenen Daten bezüglich der Störungsart zu bewerten und ggf. unter Berücksichtigung der Daten vom Baustein 52 die auf den jeweiligen Störungsfall abgestimmte Maßnahme einzuleiten (Störungsbehebung).

Je nach dem, welche Informationen von den Bausteinen 51 und 52 bereitgestellt werden, können die vom Baustein 53 eingeleiteten Maßnahmen, trotz gleicher Störungsart, sehr unterschiedlich sein. Stellt der Baustein 52 z. B. fest, daß der gerade in Arbeit befindliche Stapel Banknoten sehr gute Qualität aufweist und daß auch die Form des Stapels exakt der eines " Normstapels " entspricht, so wird in dem Fall, in dem der Baustein 51

EP 0 186 152 B2

die Vereinzelung von Doppelabzügen signalisiert, die Ursache dieser Störung in der geringen Dicke der einzelnen Banknote und der geringen Reibung dieser Banknoten untereinander gesehen. Durch Verstärkung des Vakuums an der Rückhaltewalze ist diese Störung erfahrungsgemäß zu beheben.

Wurde bei gleicher Störungsart, also erhöhter Doppelabzugsrate, eine schlechte Banknotenqualität (erhöhte Stapeldicke) festgestellt, so wird diese Störung behoben durch Einblasen von Druckluft in die Vorder- und/oder Seitenkanten des Stapels und ggf. gleichzeitiges Rütteln des Stapels. Bei schlechter Banknotenqualität " kleben " die Banknoten nämlich erfahrungsgemäß relativ stark aneinander, was durch Seitenluft und Rütteln in den meisten Fällen behoben werden kann. Bei neuen Banknoten würden diese Maßnahmen die Doppelabzugsrate eher erhöhen als verringern.

Wie bereits erwähnt, besteht die Aufgabe der Datenverarbeitungs- und Steuereinheit auch darin, vorbeugende Maßnahmen zu treffen. Bei Vorliegen von Informationen, die Unregelmäßigkeiten im Stapel nachweisen, die mit erhöhter Wahrscheinlichkeit zu Störungen im Vereinzelungsablauf führen, werden bereits vor Eintreten des Störungsfalles vorbeugende Maßnahmen eingeleitet.

Wird beispielsweise mit Hilfe der im Stapeltransportsystem vorgesehenen Lichtschranken festgestellt, daß aus der Stapelstirnfläche Blätter herausragen, so wird diese Unregelmäßigkeit, wie in der Beschreibung zu den Fig. 3a,b bereits erläutert, zu Störungen führen, die durch umgebogene Banknotenvorderkanten hervorgerufen werden. Unter Berücksichtigung dieser Tatsache werden nach Einführen des Stapels in die Vereinzelungsvorrichtung sofort alle Maßnahmen eingeleitet, die zur Behebung dieser Unregelmäßigkeit notwendig sind. Im vorliegenden Fall werden die umgebogenen Vorderkanten mit Hilfe der im Rückhalteelement 10 angeordneten beweglich angeordneten mechanischen Glieder reibschlüssig erfaßt und in den Stapel zurückgeschoben.

## Patentansprüche

1. Verfahren zur automatischen Vereinzelung von flachem Blattgut, insbesondere Banknoten mit hoher Geschwindigkeit, wobei das Blattgut stapelweise zu einem Vereinzelungsort transportiert wird, von wo aus es Blatt für Blatt einem weiterführenden Transportsystem zugeführt wird, dadurch gekennzeichnet, daß der Stapel am Vereinzelungsort in Abhängigkeit von einem Signal über eine Unregelmäßigkeit im Vereinzelungsablauf und/oder von einem Signal über eine Unregelmäßigkeit des Stapelzustands am oder vor dem Vereinzelungsort von der Ober- oder Unterseite und/oder von den vier Stoßkanten her mechanisch bzw. pneumatisch derart manipuliert wird, daß die Unregelmäßigkeiten des Stapels beseitigt werden, wodurch die ordnungsgemäße Form des Stapels wieder hergestellt wird.

2. Verfahren nach Anspruch 1, dadurch gekennzeichnet, daß die Art der mechanischen Manipulation zur Wiederherstellung der ordnungsgemäßen Form des Stapels nach dem Erscheinen eines Signals über eine Unregelmäßigkeit im Vereinzelungsablauf von der Information über den Zustand des Stapels abhängig gemacht wird.

3. Vorrichtung zur Durchführung des Verfahrens nach Anspruch 1 oder 2, dadurch gekennzeichnet, daß eine Steuereinrichtung (50) vorgesehen ist, die mit ersten Meßeinheiten (51) zur Überwachung des Vereinzelungsablaufs sowie mit zweiten Meßeinheiten (52) zur Überwachung des Stapelzustands verbunden ist und die ihrerseits in Verbindung steht mit einem Baustein (53), der die Vorrichtungselemente (14, 25, 26, 27) umfaßt, mit denen auf die Ober- oder Unterseite des Stapels und/oder auf die vier Stoßkanten des Stapels mechanisch bzw. pneumatisch zur Beseitigung der Unregelmäßigkeiten des Stapels Einfluß genommen wird, so daß die ordnungsgemäße Form des Stapels wieder hergestellt wird.

4. Vorrichtung nach Anspruch 3, dadurch gekennzeichnet, daß zur mechanischen Manipulation des Stapels am Vereinzelungsort eine Stapelhaltevorrichtung vorgesehen ist, die eine mechanisch beeinflußbare Stapelandruckplatte (14) aufweist, mit deren Hilfe auf den Stapel ein definierter flächiger Druck ausübbar ist.

5. Vorrichtung nach Anspruch 4, dadurch gekennzeichnet, daß die Stapelandruckplatte (14) mit einem Schrittmotor (15) verbunden ist, mit dem der Stapel über die Steuereinheit (50) kurzzeitig absenkbar, zusammenpreßbar oder auch rüttelbar ist.

6. Vorrichtung nach Anspruch 3, dadurch gekennzeichnet, daß zur mechanischen Manipulation des Stapels pneumatische Elemente (25, 26) vorgesehen sind, mit deren Hilfe eine oder mehrere Seiten des Stapels mit Blasluft beaufschlagbar sind.

7. Vorrichtung nach Anspruch 6, dadurch gekennzeichnet, daß die pneumatischen Elemente (26) in einem Rückhalteelement (11) angeordnet sind, an dem das Blattgut des jeweils zu vereinzelnden Stapels mit der Vorderkante anliegt. 8. Vorrichtung nach Anspruch 3, dadurch gekennzeichnet, daß zur mechanischen Manipulation des Stapels eine im Rückhalteelement (11) angeordnete und jeweils mechanisch antreibbare Friktionsrolle, ein aufgerauhtes Endlosband oder eine mit Verzahnungen versehene Anlauffläche (27) vorgesehen ist.

9. Vorrichtung nach Anspruch 8, dadurch gekennzeichnet, daß die gezahnte Anlauffläche (27) oszillierend derart antreibbar ist, daß die Zähne der Anlauffläche aus dem Rückhalteelement (11) periodisch herausragen und auf die Vorderkante des Stapels eine in etwa parallel zur Stirnfläche des Stapels gerichtete Kraft ausüben.

10. Vorrichtung nach Anspruch 3, dadurch gekennzeichnet, daß zur Überwachung des Vereinzelungsablaufs in Transportrichtung hinter dem Vereinzelungsort eine Lichtschranke (22) vorgesehen ist, die mit einem mit der Vereinzelungsvorrichtung gekoppelten Taktgeber (23) zusammenwirkt.

11. Vorrichtung nach Anspruch 3, dadurch gekennzeichnet, daß zur Überprüfung des Stapelzustands Abtastfühler (13) vorgesehen sind, die am oder vor dem Vereinzelungsort die Welligkeit und/oder die Dicke des Stapels abtasten.

12. Vorrichtung nach Anspruch 3, dadurch gekennzeichnet, daß zur Überprüfung des Stapelzustands Lichtschranken (35) vorgesehen sind, die im Transport-system (19a, 19b) angeordnet sind.

13. Vorrichtung nach Anspruch 12, dadurch gekennzeichnet, daß die Lichtschranken (35) vertikal zur Stapeltransportrichtung angeordnet sind, so daß eine Formatprüfung während des Vorbeitransportes des Stapels möglich ist.

14. Vorrichtung nach Anspruch 3, dadurch gekennzeichnet, daß zur Überprüfung des Stapelzustandes am Vereinzelungsort pneumatische Elemente (25, 26) vorgesehen sind, die mindestens eine der Stapelkanten pneumatisch abtasten.

15. Vorrichtung nach Anspruch 14, dadurch gekennzeichnet, daß die pneumatischen Elemente in einem Rückhalteelement (11) angeordnete Blasluftdüsen (26) sind, die nach der Positionierung des Stapels am Vereinzelungsort auf die Vorderkante des Stapels einwirken und den Zustand des Stapels anhand des an den Blasluftdüsen (26) jeweils auftretenden Staudruckes bewerten.

## Claims

1. Method for automatically separating flat sheet material, in banknotes at high speed, the sheet material being transported in a stack to a separating station from where it is fed sheet by sheet to an onward-feeding transport system, characterised in that the stack is mechanically or pneumatically manipulated at or ahead of the separating station from the top or bottom face and/or from the four edges in accordance with a signal about an irregularity in the course of the separation and/or from a signal about the condition of the stack, in such a way that the irregularities of the stack are overcome whereby the orderly shape of the stack is restored.

2. Method, according to claim 1, characterised in that the nature of the mechanical manipulation for restoring the orderly shape of the stack is made dependent on the information about the condition of the stack following the appearance of a signal about an irregularity in the course of the separation process.

3. Apparatus for carrying out the method according to claim 1 or 2, characterised in that a control unit (50) is provided, which is connected to first measuring units (51) for monitoring the separating process as well as to second measuring units (52) for monitoring the condition of the stack, and which in its turn is connected to a unit (53), which incorporates the elements (14,25,26,27) by which influence is exerted mechanically or pneumatically on the top or bottom face of the stack and/or on the four edges of the stack to overcome the irregularities of the stack, so that the orderly shape of the stack is restored.

4. Apparatus according to claim 3, characterised in that, for mechanical manipulation of the stack at the separating station, there is provided a stack retaining device which has a mechanically actuated stack engaging plate (14), by means of which a predetermined surface pressure can be exerted on the stack.

5. Apparatus according to claim 4, characterised in that the stack engaging plate (14) is connected to a stepping motor (15) by which the stack can be briefly lowered by means of the control unit (50), compressed or also shaken.

6. Apparatus according to claim 3, characterised in that, for the mechanical manipulation of the stack, there are provided pneumatic elements (25, 26) by means of which one or more faces of the stack can be exposed to an air blast.

7. Apparatus according to claim 6, characterised in that the pneumatic elements (26) are arranged in a supporting element (11) against which the sheet material of the stack currently to be separated engages with its leading edge.

8. Apparatus according to claim 3, characterised in that, for the mechanical manipulation of the stack, a friction roller, a roughened endless belt or an engaging surface (27) provided with teeth is arranged in the supporting element (11) and mechanically driven.

9. Apparatus according to claim 8, characterised in that the engagement surface (27) is driven in an oscillating manner so that the teeth of the engagement surface periodically project from the supporting element (11) and exert on the leading edge of the stack a force directed substantially parallel to the face of the stack.

10. Apparatus according to claim 3, characterised in that, to monitor the course of the separating process a photo-cell (22) is provided downstream of the separating station in the direction of movement and co-operates with a clock generator (23) coupled to the separating means.

11. Apparatus according to claim 3, characterised in that, for monitoring the state of the stack, scanning feelers (13) are provided, scanning the waviness and/or the thickness of the stack at or ahead of the separating station.

12. Apparatus according to claim 3, characterised in that, for monitoring the state of the stack, photo-cells (35) are provided, arranged in the feed system (19a, 19b).

13. Apparatus according to claim 12, characterised in that the photo-cells (35) are arranged vertically with respect to the direction of movement of the stacks so that it is possible to check the format during the passage of the stack.

14. Apparatus according to claim 3, characterised in that, for monitoring the state of the stack, pneumatic elements (25, 26) are provided at the separating station and scan at least one of the edges of the stack pneumatically.

15. Apparatus according to claim 14, characterised in that the pneumatic elements are air blast nozzles (26) arranged in a supporting element (11) and acting on the leading edge of the stack after positioning of the stack at the separating station, and evaluating the state of the stack in conjunction with the back pressure arising respectively at the air blast nozzles (26).


**Revendications**

1. Procédé pour la séparation automatique à grande vitesse de feuilles plates, notamment de billets de banque, d'après lequel les feuilles sont transportées en piles en un endroit de séparation d'où elles sont amenées feuille par feuille à un autre système de transport qui les emmène, caractérisé en ce que la pile est manipulée mécaniquement ou pneumatiquement à l'endroit de séparation à partir de la face supérieure ou inférieure et/ou à partir des quatre bords en fonction d'un signal concernant une irrégularité dans le déroulement de la séparation et/ou d'un signal concernant une irrégularité dans l'état de la pile à l'endroit de séparation ou avant celui-ci de manière à éliminer les irrégularités de la pile pour rétablir la forme correcte de la pile.

2. Procédé selon la revendication 1, caractérisé en ce que la nature de la manipulation mécanique visant à rétablir la forme correcte de la pile après l'apparition d'un signal relatif à une irrégularité dans le déroulement de la séparation est rendue dépendante de l'information sur l'état de la pile.

3. Dispositif pour l'exécution du procédé selon la revendication 1 ou 2, caractérisé en ce qu'il est prévu un dispositif de commande (50) qui est relié à de premières unités de mesure (51) pour la surveillance du déroulement de la séparation ainsi qu'à de deuxièmes unités de mesure (52) pour la surveillance de l'état de la pile et qui se trouve pour sa part relié à un bloc fonctionnel (53) qui comprend les éléments du dispositif (14, 25, 26, 27) avec lequels il est exercé une action mécanique ou pneumatique sur la face supérieure ou inférieure de la pile et/ou sur les quatre bords de la pile afin d'éliminer les irrégularités de la pile de manière à rétablir la forme correcte de la pile.

4. Dispositif selon la revendication 3, caractérisé en ce qu'il est prévu pour la manipulation mécanique de la pile à l'endroit de séparation, un dispositif de retenue de pile qui présente une plaque de pression de pile (14) sur laquelle on peut agir mécaniquement et à l'aide de laquelle une pression en surface définie peut être exercée sur la pile.

5. Dispositif selon la revendication 4, caractérisé en ce que la plaque de pression de pile (14) est reliée à un moteur pas à pas (15) au moyen duquel la pile peut être abaissée, comprimée ou soumise à des secousses pendant une courte période au moyen de l'unité de commande (50).

6. Dispositif selon la revendication 3, caractérisé en ce que sont prévus pour la manipulation mécanique de la pile, des éléments pneumatiques (25, 26) à l'aide desquels de l'air insufflé peut être admis sur une ou plusieurs faces de la pile,

7. Dispositif selon la revendication 6, caractérisé en ce que les éléments pneumatiques (26) sont disposés dans un élément de retenue (11) contre lequel s'appuient par leur bord antérieur les feuilles de la pile à séparer.

8. Dispositif selon la revendication 3, caractérisé en ce qu'il est prévu pour la manipulation mécanique de la pile, un rouleau de friction disposé dans l'élément de retenue (11) et entraînable mécaniquement pour sa part, une bande sans fin rendue rugueuse ou une surface de démarrage (27) pourvue de dents.

9. Dispositif selon la revendication 8, caractérisé en ce que la surface de démarrage dentée (27) peut être entraînée avec des oscillations de telle sorte que les dents de la surface de démarrage émergent périodiquement hors de l'élément de retenue (11) et exercent sur le bord antérieur de la pile une force dirigée de manière sensiblement parallèle à la face frontale de la pile.

10. Dispositif selon la revendication 3, caractérisé en ce qu'il est prévu pour la surveillance du déroulement de la séparation, une barrière lumineuse (22) qui est disposée suivant la direction du transport derrière l'endroit de séparation et coopère avec un générateur d'impulsions (23) couplé avec le dispositif de séparation.

11. Dispositif selon la revendication 3, caractérisé en ce que sont prévus pour l'examen de l'état de la pile, des palpeurs (13) qui explorent sur le lieu de séparation ou avant celui-ci l'ondulation et/ou l'épaisseur de la pile.

12. Dispositif selon la revendication 3, caractérisé en ce que des barrières lumineuses (35) qui sont disposées dans le système de transport (19a, 19b) sont prévues pour l'examen de l'état de la pile.

13. Dispositif selon la revendication 12, caractérisé en ce que les barrières lumineuses (35) sont disposées verticalement par rapport à la direction de transport de la pile, de manière à permettre un contrôle de format de la pile pendant son transport devant elles.

14. Dispositif selon la revendication 3, caractérisé en ce que sont prévus pour l'examen de l'état de la pile à l'endroit de séparation des éléments pneumatiques (25, 26) qui explorent pneumatiquement au moins un des bords de la pile.

15. Dispositif selon la revendication 14, caractérisé en ce que les éléments pneumatiques sont des buses d'insufflation d'air (26) disposées dans un élément de retenue (11) qui, après le fonctionnement de la pile à l'endroit de séparation, agissent sur le bord antérieur de la pile et évaluent l'état de la pile d'après la pression retenue intervenant respectivement au niveau des buses d'insufflation d'air (26).

FIG.1

EP 0 186 152 B2

FIG. 2

FIG. 3a

FIG. 3b

EP 0 186 152 B2

FIG.4

FIG.5

13